# EUROPEAN PATENT APPLICATION

(11) **EP 4 072 080 A1**
(43) Date of publication of application: **12.10.2022**
(21) Application number: 20907339.4
(22) Date of filing: 28.12.2020
(51) Int. Cl.: H04L 12/707

(54) **DATA FLOW CONTROL METHOD AND DEVICE**

(30) Priority: 25.12.2019 CN 201911361463
(71) Applicant: Huawei Technologies Co., Ltd., Shenzhen, Guangdong 518129 (CN)
(72) Inventor: LI, Bochao, Shenzhen, Guangdong 518129 (CN); HE, Bin, Shenzhen, Guangdong 518129 (CN); YANG, Chuang, Shenzhen, Guangdong 518129 (CN); WANG, Kang, Shenzhen, Guangdong 518129 (CN); ZHU, Jianjian, Shenzhen, Guangdong 518129 (CN)
(74) Representative: Maiwald Patent- und Rechtsanwaltsgesellschaft mbH
(86) International application number: PCT/CN2020/140002
(87) International publication number: WO 2021/129861

(57) **Abstract**

This application describes a data flow control method. During selection of an initial transmission path for a newly created data flow, completion times (Flow Completion Time, FCT) for outputting the data flow through a plurality of networks are estimated, and a network corresponding to a relatively short estimated time is selected to transmit the data flow. In addition, in a data flow transmission process, a network transmission requirement of an application corresponding to a sent data packet is identified, transmission performance on a current path is evaluated based on a type of a service carried by the data flow, and whether the data flow needs to be changed, for example, whether the data flow needs to be terminated, is determined based on transmission performance of a link currently accessed by a terminal. In this way, transmission performance of the data flow can be better ensured, giving full play to an advantage of a multipath transmission technology.

## Description

### TECHNICAL FIELD

The present invention relates to the communications field, and in particular, to a data flow control method and apparatus.

### BACKGROUND

Information is often exchanged between applications of a computer. In the multipath transmission technology, data is transmitted in parallel by using a plurality of subflows (subflow) between the client and the serving end, and each subflow corresponds to one path (path). For example, the multipath transmission control protocol (MPTCP, Multiple Path Transmission Control Protocol) is based on the transmission control protocol (TCP, Transmission Control Protocol). Multipath transmission technologies may be collectively referred to as MP technologies. If one connection includes a plurality of subflows, the connection is referred to as a multipath connection, namely, an MP connection. Each of the plurality of subflows corresponds to a link between a client and a server, and links corresponding to the plurality of subflows are usually different. A connection is usually used for data transmission between clients of an application or between a client and a server.

In theory, in comparison with single-path transmission, the multipath transmission technology helps increase a data throughput, and therefore is applicable to online video playing and data downloading. The multipath transmission technology also helps reduce a latency and improve data transmission reliability, and therefore is applicable to game playing. Data may be transmitted in the plurality of subflows based on at least one of a Wi-Fi network and a cellular network. The cellular network may be a 5G network, a 4G network such as a long term evolution (LTE, Long Term Evolution) network, a 3G network such as a code division multiple access (CDMA, Code Division Multiple Access) network, a 2G network, or the like.

A quantity of available paths for data transmission is increased due to use of a multipath technology. Therefore, in an actual application scenario, how to properly allocate, to the paths, data to be transmitted by a device, to better achieve transmission performance (for example, a throughput or a delay) that can be achieved by using the multipath technology and that is better than that of a single-path connection in a same network environment is a hot issue in current research. In an existing solution, an advantage of the multipath technology cannot be exerted quite well, even sometimes transmission performance achieved by using the multipath technology is poor than that of a single-path connection.

### SUMMARY

In view of this, this application provides a data flow control method and apparatus, to determine, in a link establishment phase based on network transmission performance, an initial path for transmitting a data flow, and switch a transmission path in a data flow transmission process based on user experience (Quality of Experience, QoE) of a service, namely, a requirement of the service for quality of service. In this way, transmission performance (for example, a throughput or a delay) of transmitting different services by using a multipath technology can be better ensured, and an advantage of transmission performance of the multipath technology can be better exerted than a single-path connection.

According to a first aspect, this application describes a data flow control method. The method is applied to a device supporting a multipath technology. The method includes: based on a destination address of a first data flow and estimated transmission performance of a link from each of a plurality of network interfaces of the device to the destination address, creating the first data flow and transmitting data of the first data flow by using a first network interface in the plurality of network interfaces, where the transmission performance indicates a transmission time required for transmitting the data of the first data flow over the link, and a transmission time corresponding to a link from the first network interface to the destination address is shorter than that corresponding to at least one other link in the links from the plurality of network interfaces to the destination address; and when a network corresponding to the first network interface cannot satisfy quality of experience QoE of a service carried by the first data flow, changing a source IP address of the first data flow or terminating the first data flow. In this way, transmission performance of the data flow can be better ensured, giving full play to an advantage of a multipath transmission technology.

In an implementation, a first port further needs to be obtained based on a destination port of the data flow.

In an implementation, when a terminal device is connected to the Internet through a plurality of types of networks and an application in the terminal device creates a new data flow, before selecting a transmission path for the data flow, the operating system or the protocol stack estimates data flow completion times (Flow Completion Time, FCT) for transmitting the data flow in different networks. An estimation method may include: estimating a data volume of the data flow based on information such as a service type of the application and a destination address and a destination port of the data flow, estimating, based on a transmission status of a historical data flow whose destination address is the same as or similar to that of the data flow in each network, including but not limited to a network quality (Quality of Service, QoS) parameter such as a bandwidth, a delay, and a packet loss rate, a network quality parameter for transmitting the data flow in the network, and calculating a data flow completion time based on the estimated data flow and the estimated network quality parameter. A network interface that most satisfies an expectation of a user is selected based on information such as impact of the data flow completion time on user experience of using the application and a preference of the user for a traffic fee, to transmit the data flow. For example, if the user selects a performance mode, a network corresponding to a short estimated data flow completion time is selected; and if the user selects a saving mode, a free network (for example, a wireless local area network WLAN) is selected as much as possible if a data flow completion time corresponding to the free network does not cause obvious application stalling. In addition, in a data flow transmission process, whether the user experiences obvious stalling in a process of using the application is determined in real time based on a status of receiving or sending a data packet by using the data flow, for example, information such as a quantity of data packets received or sent per second, a packet loss rate, and a sending/receiving delay. When obvious stalling occurs, a data flow completion time of the data flow in another network and corresponding user experience are determined by using the foregoing method. If better user experience can be brought by performing data transmission in another network, transmission of the data flow is changed. For example, a socket (socket) corresponding to the data flow is closed, the application is triggered to capture an exception and create a new socket, and then the socket is bound to a better network interface. In this way, transmission performance of the data flow can be better ensured, giving full play to an advantage of the multipath transmission technology.

The data flow is identified by using a 5-tuple. In an implementation, the transmission time required for transmitting the data of the first data flow over the link may be a data flow completion time (Flow Completion Time, FCT). Certainly, the transmission time may alternatively be represented by a parameter in another form. In other words, there may be a plurality of manners of calculating the transmission time required for transmitting the data of the first data flow over one link. In an implementation, the plurality of network interfaces correspond to different networks. The plurality of network interfaces may be in a one-to-one correspondence with different networks, or several network interfaces correspond to one type of network. "Correspond" means that a device needs to be connected to a network through a fixed network interface, and the network interface may be an interface on a network interface card.

In an implementation, the transmission performance is related to a bandwidth of the link, a delay, and a data volume of the first data flow, the bandwidth is a historical bandwidth or a currently available bandwidth, and the delay is a historical delay or a current delay of the link. The bandwidth and the delay can more accurately reflect the transmission performance of the link. However, the data changes with time. When no data flow has been transmitted, historical data obtained in a similar scenario may be used for estimation.

In an implementation, the transmission performance is related to at least one of a bandwidth of the link, a delay, a packet loss rate, a service type corresponding to the first data flow, and a data volume of the first data flow. The bandwidth of the link may be represented by a historical bandwidth or a currently available bandwidth for receiving/sending data from/to the destination address or a similar destination address over the link. The delay of the link may be represented by a historical delay or a current link delay for receiving/sending data from/to the destination address or the similar destination address over the link. The similar destination address may be from a preset database, a table, or the like, and is a pre-specified destination address that may be equivalent to the destination address during calculation of information such as the bandwidth of the link, the delay, and the packet loss rate.

In an implementation, the currently available bandwidth is obtained in the following manner: calculating a total bandwidth of a network based on a data packet size and a data packet arrival interval of a plurality of data flows currently transmitted through the network, and subtracting a currently used bandwidth from the total bandwidth to obtain the currently available bandwidth.

In an implementation, the method further includes: identifying, based on a data packet received or sent through the first network interface, the service carried by the first data flow; calculating a bandwidth that is occupied by the first data flow and that is of a network corresponding to the first network interface and a delay of transmitting the first data flow through the network corresponding to the first network interface; and determining whether the network corresponding to the first network interface satisfies the quality of experience QoE of the service carried by the first data flow. A rule for identifying a service and a rule for evaluating quality of experience of the service may be preset, and then identification, calculation, and determining are performed based on information collected in a transmission process.

In an implementation, the method further includes: recording a correspondence between at least one parameter in a 5-tuple of the first data flow and the first network interface. In this way, during subsequent creation of a new data flow, if some parameters are the same as those of the first data flow, reference may be made to the correspondence.

In an implementation, the method further includes: creating a second data flow by using a second interface in the plurality of network interfaces, where the second data flow and the first data flow have a same source IP address and a same destination IP address and use a same transport-layer protocol; and recording a correspondence between at least one parameter in a 5-tuple of the second data flow and the second network interface. In other words, a first data flow is recreated, and transmission of corresponding data continues. In addition, after the correspondence between the at least one parameter in the 5-tuple of the second data flow and the second network interface is recorded, the correspondence between the at least one parameter in the 5-tuple of the first data flow and the first network interface may be deleted. This implementation corresponds to the following case: If better user experience can be brought by performing data transmission in another network, a network interface for the data flow is changed. For example, after the first data flow is terminated, the application may capture a socket exception corresponding to the first data flow, and create a new data flow (that is, the second data flow) to attempt to continue transmitting the data of the first data flow. The operating system transmits the second data flow through a network interface (that is, the second network interface) that can satisfy the quality of experience QoE of the service. In other words, in this implementation, the second data flow can better satisfy a service requirement. In this way, a more suitable network may be used to continue transmitting the data of the first data flow, thereby ensuring transmission quality.

According to a second aspect, this application describes a data flow control apparatus. The apparatus is located in a device supporting a multipath technology. The apparatus includes: a data flow creation module, configured to: based on a destination address of a first data flow and estimated transmission performance of a link from each of a plurality of network interfaces of the device to the destination address, create the first data flow and transmit data of the first data flow by using a first network interface in the plurality of network interfaces, where the transmission performance indicates a transmission time required for transmitting the data of the first data flow over the link, and a transmission time corresponding to a link from the first network interface to the destination address is shorter than that corresponding to at least one other link in the links from the plurality of network interfaces to the destination address; and a data flow switching module, configured to: when a network corresponding to the first network interface cannot satisfy quality of experience QoE of a service carried by the first data flow, change a source IP address of the first data flow or terminate the first data flow.

The apparatus for implementing the method in the first aspect is described in the second aspect. Therefore, for an explanation of this aspect and descriptions of implementations and beneficial effects of the apparatus, refer to related sections of the first aspect.

According to a third aspect, a device is provided. The device is configured to control a data flow, the device includes: a processing circuit, a communication interface, and a storage medium, the storage medium stores instructions, and the communication interface is configured to perform information interaction with another device according to the instructions delivered by the processing circuit. The processing circuit is configured to run the instructions in the storage medium, to implement the method described in the first aspect and various implementations of the first aspect.

According to a fourth aspect, a computer program product is provided. The computer program product is configured to store program code that can be used to implement the method according to any one of the implementations of the first aspect.

According to a fifth aspect, a computer-readable storage medium is provided. The computer-readable storage medium includes instructions. When the instructions are run on a computer, the computer is enabled to perform the method in any one of the implementations of the first aspect.

It should be understood that, the device corresponding to the first aspect is described in the third aspect, the computer program product corresponding to the first aspect is described in the fourth aspect, and the computer-readable storage medium corresponding to the first aspect is described in the fifth aspect. Various specific implementations and technical effects of the device, the computer program product, and the computer-readable storage medium are not described.

### BRIEF DESCRIPTION OF DRAWINGS

To describe the technical solutions in the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of multi-subflow communication between a terminal and a server according to this application;
FIG. 2 is an architectural diagram of software and hardware of a device according to this application;
FIG. 3 is an architectural diagram of software of a device according to this application;
FIG. 4 is a schematic diagram of a structure of a data flow control apparatus according to this application;
FIG. 5 is a schematic diagram of a data flow control method according to this application;
FIG. 6 is a schematic diagram of a structure of another data flow control apparatus according to this application; and
FIG. 7 is a schematic diagram of a structure of a data flow control device according to this application.

### DESCRIPTION OF EMBODIMENTS

This application provides a data flow control method, apparatus, and system. The following clearly and completely describes technical solutions in this application with reference to the accompanying drawings in this application. All other embodiments obtained by a person of ordinary skill in the art based on the embodiments of the present invention without creative efforts shall fall within the protection scope of the present invention.

It should be understood that, various term explanations in this application are universal to a plurality of embodiments. A description of a method embodiment in this application is universal to other types of embodiments, for example, embodiments of an apparatus, a device, or a computer program product.

An actual networking environment is relatively complex, and a multipath transmission scenario in which there are more than one path is becoming increasingly popular. In a wide area network, if there are a plurality of operators in an area, the area may support TCP data transmission performed in more than two paths. A terminal may find a plurality of Wi-Fi hotspots. For another example, in a data center, multipath TCP data transmission performed in three or more paths may be implemented by using an equal-cost multipath routing (Equal-Cost MultiPath routing, ECMP) technology.

In a process in which a terminal is connected to a network through a path to perform data flow transmission with a server, transmission performance fluctuates in an actual networking environment. A delay in the path is used as an example. The delay includes a terminal processing delay, a wireless access delay, and a fixed network delay. The terminal processing delay (the delay is approximately 10 ms and is relatively short) and the wireless access delay (the delay is approximately 30 ms and is relatively long) fluctuate greatly and are unpredictable, and therefore cannot be ensured by using network quality of service, while the fixed network delay (which is approximately 60 ms) is controllable and predictable. Therefore, a delay of a link can be controlled relatively effectively by reducing the wireless access delay. Data transmitted by using a multipath technology is usually transmitted in a form of a data flow. Therefore, there may be a plurality of implementations for a transmission path of a data flow. Transmission performance is usually different when different paths are used. The data flow control method described in this application is to control a transmission path of a data flow, so that a service carried by the data flow has better transmission performance. One path is implemented by a link including a plurality of communication devices, and one path corresponds to a type of network.

In the MPTCP technology, a plurality of transmission paths may be controlled based on network connectivity or network signal strength. Specifically, one interface may be selected from a plurality of network interfaces of a terminal to receive or send data, to achieve expected transmission performance. For example, a network to be connected is selected based on signal strength of a wireless local area network (Wireless LAN, WLAN) and a mobile data network that is detected by the terminal. A WLAN network is automatically enabled or disabled at a specified location based on a record of a WLAN network that has been connected before. The terminal attempts to be connected to another available WLAN network when a WLAN is not well connected or cannot be accessed. However, both theoretical analysis and actual testing indicate that network signal strength of an access point is not sufficient to accurately represent transmission performance of a network.

In addition, during transmission of data of different types of services (a service is a task that requires data exchange and that is initiated by an application) through paths with same QoS, because requirements of the services for transmission performance of the paths have different focuses, for example, a real-time game application requires a low delay and a low packet loss rate, but does not require a high bandwidth, while file downloading requires a high bandwidth but can tolerate a relatively high packet loss rate and delay, transmission performance of transmitting different services in a same network path also fluctuates greatly. Therefore, expected transmission performance cannot be achieved only through QoS-based path control. In addition, because different networks have different characteristics, even if real-time QoS of two types of networks is quite similar, transmission performance presented when different services are transmitted through the two types of networks is different. For example, a bandwidth of a Wi-Fi network is high but a delay in the Wi-Fi network is unstable, and a bandwidth of an LTE network is low but a delay in the LTE network is stable. Therefore, it is better to use the LTE network for data of the game application (if the Wi-Fi network is unstable), and it is better to use the Wi-Fi network for file downloading. Therefore, a manner in which routing policies for a plurality of types of different services are determined only based on QoS (this manner is a current practice in the industry) cannot be used.

In the data flow control method proposed in this application, a parameter (for example, a transmission delay and a bandwidth of a network) that is of higher reference significance and that is in network QoS (indicating quality of a network link) and transmission requirements (which may be represented as QoE) of different services are comprehensively considered, and more accurate data allocation for multipath transmission is implemented based on a service. In this method, data collection does not need to be performed in an application. Therefore, such control cannot be perceived by a transmitted service. This method includes selection of an initial path for a data flow and path switching in a packet transmission process, where the data flow is identified by a 5-tuple. Path switching may be killing a data flow (that is, terminating the data flow) and then recreating a data flow through another network. A 5-tuple of the newly created data flow is different from that of the killed data flow.

Specifically, during selection of the initial path for the data flow, when an initial transmission path is selected for the newly created data flow, no data packet is transmitted in the initial transmission path. In this case, transmission performance of the data flow cannot be obtained. Therefore, how to select a proper initial path in this case needs to be considered. For another example, in a data flow transmission process, whether a packet in a data flow is suitable to continue to be transmitted in a current path may be determined based on a transmission requirement of a service corresponding to the data flow and transmission performance of transmitting the service flow in the current path. For a third-party application installed in a terminal, if the application needs to provide QoE information of a service for a protocol stack of the terminal, technical costs and commercial costs of the terminal are increased. Therefore, a transmission requirement of a service corresponding to a data flow and transmission performance of transmitting the service flow in a current path need to be obtained without relying on a third-party application.

The following explains some terms in this application.

A and/or B represents A and B, or A or B.

Multipath connection: a plurality of subflows that may be used for communication performed between two hosts (host) over (over) an application (an application, an App). A host (host) is an end node of a multipath connection, the end node may be a transmit end or a receive end, an application is run on the host, and there is a mapping between the multipath connection and an interface (socket) of the application. It should be understood that, the transmit end may be an application, or may be a host on which the application is located. A link that is between two hosts (host) and that can be used to perform communication over (over) an application may also be referred to as a connection, except that an MP connection includes a plurality of paths, and a common connection has only one path. The two hosts usually run on two physical machines.

In this application, an application may be deployed on a network device (such as a server, a gateway, or a proxy server), and may also be deployed on a terminal. A third-party application is an application installed in a terminal. The application does not need to transfer, to an operating system of the terminal, a requirement for network transmission performance during data transmission performed by the application, or the terminal cannot obtain, from the application, a requirement for network transmission performance during data transmission performed by the application. For example, for an iPhone, during data receiving or sending in a system application pre-installed in the iPhone, an operating system iOS of the iPhone (iPhone OS) may obtain, from the system application, transmission performance required by the system application or a requirement of transmitting a group of to-be-transmitted data. For example, the system application is an application store (APP Store). If the application store needs to download a new application (which may be understood as a service) from a server based on a user operation, the operating system may learn of at least one of the following information: a downloading amount, a required bandwidth, a time required for completing downloading, and the like when the application store executes the service. For another example, if some software service providers cooperate with some device vendors, after applications of the software service providers are installed in devices of the device vendors, the applications may proactively notify, by using API interfaces, operating systems of the devices of information indicating transmission performance, for example, a delay.

Service: one or more tasks that are performed by an application and that have similar functions and require data exchange. The data exchange is data exchange between different clients of an application, between a client and a server side, or between different network nodes server sides. There are a plurality of types of services. During using of an application, a user may trigger a plurality of types of services. Common service types include online PvP gaming, web page browsing, file downloading, video-live-broadcast initiation, network video watching, real-time audio communication, real-time video communication, listening to network audio, and the like. For example, a URL including a string such as mp4, ts, or flv corresponds to video on demand. When an application performs data exchange of a service, one or more data flows are usually required for transmission. Such a data flow may also be referred to as a data flow of a service.

A data flow (data flow), referred to as a flow for short, refers to a group of packets transmitted over a link. The group of packets may be used to implement a service or a part of a service. For example, a stream is used to transmit data of a group of pictures on a web page, or data of a small video on a video website. In this application, one 5-tuple is used to identify one data flow. In other words, a group of packets that carry a same 5-tuple are packets that belongs to one data flow. For one multipath connection, a plurality of data flows may be concurrently transmitted, and a packet in one data flow is not simultaneously transmitted in a plurality of subflows. Killing a data flow means terminating data transmission in the data flow, that is, stopping data transmission performed by using a 5-tuple corresponding to the data flow. If the 5-tuple still needs to be used for data transmission subsequently, the data flow is recreated.

A 5-tuple is a set including five quantities: a source IP address, a source port number, a destination IP address, a destination port number, and a transport layer protocol name. For example, in some scenarios, for different data flows corresponding to one service, source IP addresses are the same, destination IP addresses are the same, and transport layer protocol names are the same, but source port numbers are different and/or destination port numbers are different.

Path (path): The path is a link (link) between a sender (sender) and a receiver (reciever). The path may be identified by a 4-tuple or a 5-tuple. For example, the 5-tuple includes a source IP address, a source port number, a destination IP address, a destination port number, and a transport layer protocol name. A plurality of paths between one receiver and one transmitter may share one or more routers (router).

Subflow (subflow): a flow running on a single path (path). A subflow is a part of a multipath connection. In a multipath transmission technology, a subflow may use a plurality of common single-flow transport-layer protocols, for example, the TCP (transmission control protocol, Path Transmission Control Protocol), the UDP (User Datagram Protocol, user datagram protocol), the SCTP (stream control transmission protocol, Stream Control Transmission Protocol), or QUIC (quick UDP internet connection, Quick UDP Internet Connections), may be used. A single subflow is controlled by using a transmission protocol corresponding to the subflow.

A network interface card (Network Interface Card, NIC) may also be referred to as a network interface card controller or a network interface controller, and is referred to as a network card for short. A network interface card mentioned in this specification is a physical network interface card, or may be a virtual network interface card obtained through virtualization of a physical network interface card. The network interface card generally has a plurality of interfaces and usually has one interface. A physical network interface card is a piece of hardware designed to allow a physical machine or another device to be connected to a network to communicate with another network element, and may run in a physical machine. In a connection, if a physical node has known a network interface card used by the physical node to be connected to a network, the physical node may also determine an IP address used by the physical node in the connection.

For related content of a host (host), a path (path), a link (link), and a subflow (subflow), refer to RFC.

Quality of service (Quality of Service, QoS) is a description or measure of overall performance of a service (for example, a phone service, a computer network service, or a cloud computing service), especially performance learned by a network user. To quantitatively measure the quality of service, several related aspects of a network service, for example, signal strength, a data packet loss (packet loss), a bit rate (bit rate), a throughput (throughput), a transmission delay (transmission delay, i.e.rtt),availability (availability), and jitter (jitter), are usually considered.

Quality of experience (Quality of Experience, QoE): QoE recorded in ITU-TP. 10 of the International Telecommunication Union in 2016 is defined as a degree of happiness or annoyance of a user of an application or a service. QoE is generated based on a personality and a current status and whether the user's expectation for a utility program and/or enjoyment of an application program or a service are satisfied. Although it is considered that QoE is subjective, QoE is an important indicator and can be measured in a controllable manner. QoE is used to consider a plurality of factors that affect a system or quality of service perceived by a user. For example, QoE may be related to one or more of content, media (for example, encoding, a resolution, or a sampling rate), a network (for example, a bandwidth, a delay, or jitter), and a device (for example, a screen resolution or a display size). This application mainly relates to QoE of a service in data transmission. The QoE of a service can be understood as smooth service execution, fast data downloading, or the like.

A flow completion time (Flow Completion Time, FCT) is a time from a time at which the first data packet in a flow is sent to a time at which the last data packet in the flow is received by a peer device. In the TCP protocol, the first data packet in a flow is a synchronize sequence number (Synchronize Sequence Numbers, SYN) packet.

Deep packet inspection (Deep Packet Inspection, DPI) means performing detection and analysis on traffic of a communication node and content of a received or sent packet in a network to implement functions such as identification of a service transmitted over a link in which the communication node is located and collection of statistics about service traffic.

An acknowledgment character (Acknowledge character, ACK) is a type of transmission control character sent by a receive end to a transmit end in data communication, and indicates that it is confirmed that a packet sent by the transmit end has been received correctly.

A round-trip delay (Round-Trip Time, RTT) refers to a sum of a time for propagating a signal (for example, a packet) from a transmit end to a receive end and a time for the receive end to return a message (for example, an ACK) in two-party communication.

A send window, also referred to as a window (window), is used to indicate a quantity of bytes that a data transmit end is allowed to transmit, and is also a maximum data volume that a data receive end allows the data transmit end to put into a transmit queue once. When a subflow uses the TCP protocol, for the data transmit end, it may be considered that a value of a send window is equal to that of a congestion window (CWND, congestion window).

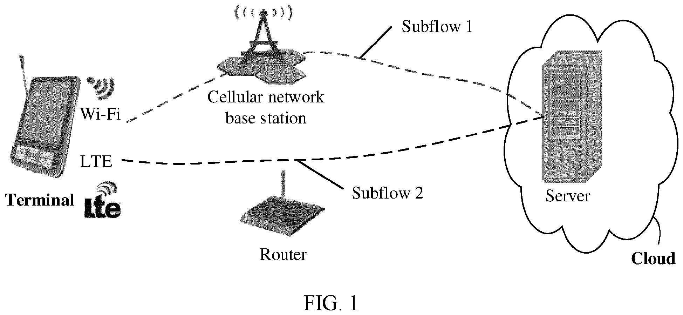

FIG. 1 shows a common scenario, that is, end-cloud communication. A client of an application is deployed in a terminal, and the terminal may be referred to as a local device. Server code of an application is deployed in a server, and the server may be referred to as a peer end. In FIG. 1, a case in which both a terminal and a server support a multipath technology is described. In another scenario, the terminal supports the multipath technology, a plurality of applications in the terminal use a plurality of types of networks to communicate with different servers, while some servers do not use the multipath technology. The method described in this application may also be used in this scenario. For example, data may be provided to a same service of a same application by a plurality of servers in different networks.

The multipath transmission technology may be used in a plurality of types of networking systems. Generally, if information needs to be transmitted by using the multipath transmission technology, at least one link between an information transmit end and an information receive end should support the multipath transmission technology. The plurality of types of networking systems may be a system in which communication is performed between terminals, a system in which communication is performed between clouds, and a system in which communication is performed between a cloud and a terminal (for example, FIG. 1). The method described in this application may be performed by an end node of a multipath transmission connection. The end node may be located on an end device that supports the multipath transmission technology. If an end device at an end does not support multipath transmission, to transfer a packet by using the multipath transmission technology, a proxy device that supports the multipath transmission technology must be used. The technical solutions of this application are applied to the proxy device that supports the multipath transmission technology. Specifically, the technical solutions of this application are applied to a cloud-based device that supports a multipath transmission protocol, such as a server; a terminal that supports the multipath transmission protocol, such as a desktop computer, a notebook computer, a tablet computer, a cellular phone, a smart watch, a smartphone, or a PDA; and a network element that supports the multipath transmission protocol, such as a gateway, an access router, a core router, a front-end router, or a load balancer.

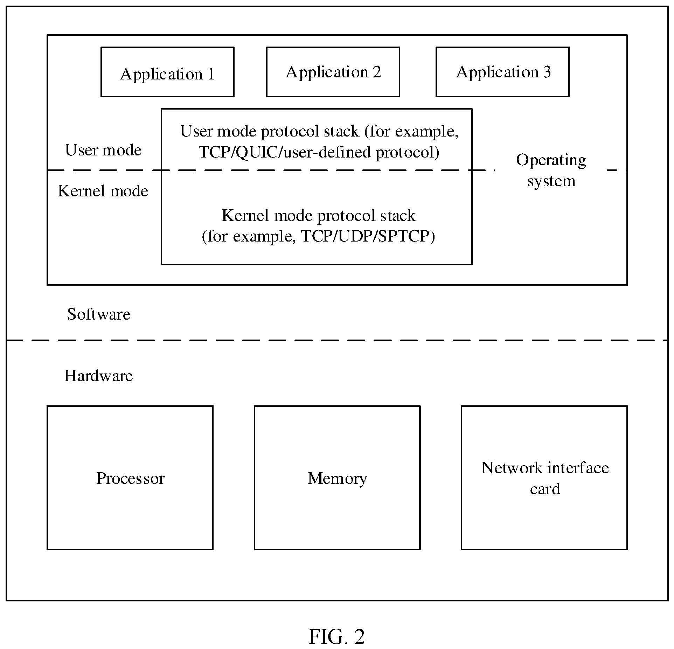

FIG. 2 is a schematic architectural diagram of a device. Hardware of the device includes various hardware components or apparatuses, such as a memory, a processor, and a network interface card for network interconnection. There may be one or more network interface cards. If there is one network interface card, a plurality of network interface cards are obtained through virtualization by using a virtual network interface card technology, to support a plurality of types of networks. If there are a plurality of network interface cards, each network interface card may support one type of network, or the virtual network interface card technology may be applied to at least one of the network interface cards. For example, in a terminal, different network interface cards are respectively configured to be connected to a cellular network and a Wi-Fi network, or the terminal may be connected to a plurality of Wi-Fi networks at the same time. For another example, a terminal supports numbers that belong to different operators. For example, two SIM cards may both be installed in the terminal, and two cellular networks may be used to perform multipath transmission. In this case, the terminal uses different network interface cards when accessing the Internet by using two mobile communication numbers. Software of the device includes an operating system and an application (such as an application A, an application B, or an application C) that runs in a user mode of the operating system. The operating system includes a kernel mode and the user mode. The figure illustrates some example single-flow user mode protocols and kernel mode protocols. These protocols may be used to control a subflow of a multipath connection. Locations of different protocols are also slightly different. For example, UDP or a stream control transmission protocol (Stream Control Transmission Protocol, STCP) is a kernel mode protocol, a quick UDP network connection (Quick UDP Internet Connection, QUIC) protocol and some private protocols are user mode protocols, and a TCP protocol crosses the kernel mode and the user mode. From a perspective of the operating system, multipath transmission corresponds to both a kernel mode protocol and a user mode protocol.

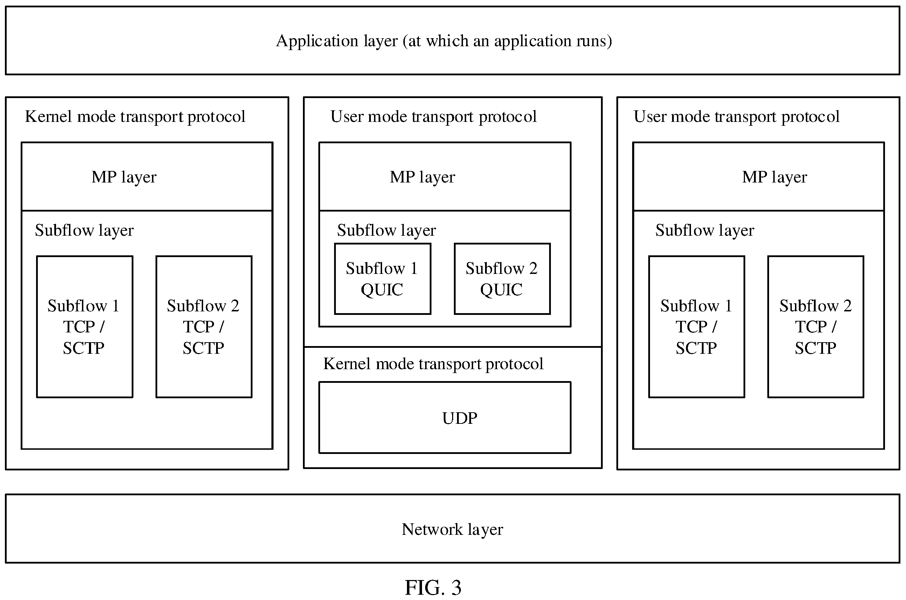

The method described in this application may be stored in the memory in FIG. 3 in a form of code, and is invoked by the processor to be implemented in software, such as a network layer, a transport layer, and an application layer of a protocol stack.

The protocol stack may include a physical layer, a data link layer, the network layer, the transport layer, and the application layer, which are configured to implement protocols of the layers. FIG. 3 describes relative locations of various protocols in this application from a perspective of a protocol stack. FIG. 3 includes a network layer, a transport layer, and an application layer. A multipath transmission protocol layer may be considered as being located at the transport layer, and therefore is also referred to as a multipath transport layer, which replaces currently common transport layer protocols. The multipath transmission protocol layer includes an MP layer that is used to control a whole multipath connection and a subflow layer that controls a subflow. The foregoing various protocols may be used for each subflow layer. There are only kernel mode multipath transmission protocols, only user mode multipath transmission protocols, or both kernel mode multipath transmission protocols and user mode multipath transmission protocols. The network layer (Network Layer) includes an IP protocol and is also referred to as an IP layer. An IP address described in this application may be obtained by the network layer. However, an operator identifier described in this application may be obtained from the network layer or a lower layer. Various applications run at the APP layer and correspond to the user mode in FIG. 2. It can be learned that FIG. 3 is described from a perspective of an internet protocol stack, and depicts the top three layers that are more highly associated with the method described in this application but does not depict a data link layer or a physical layer. Hardware in FIG. 2 may be considered as corresponding to a physical layer. The application layer communicates with the transport layer through a standard socket (standard Socket) interface, for example, an API. FIG. 3 illustrates three implementations of a multipath transport layer. In each implementation, an MP layer and a subflow layer are included, where a multipath transmission protocol runs at the MP layer and two subflows are illustratively depicted at the subflow layer. The device in FIG. 3 may include any one of the three multipath transport layers. In addition, three implementations of each of the application layer and the IP layer are similar to the three implementations of the transport layer, and therefore are not described separately. An MP layer in a user mode is shown in the middle, a subflow of the MP layer uses the QUIC protocol, and the UDP protocol is used for a kernel mode. A multipath transport layer in a user mode is shown on the right side, and a subflow of the multipath transport layer uses the TCP/SCTP protocol.

Based on the foregoing scenarios and problems, according to the method described in this application, during selection of an initial transmission path for a newly created data flow, completion times (Flow Completion Time, FCT) for outputting the data flow through a plurality of networks are estimated based on a type of a service carried by the data flow, historical QoS information of a plurality of paths that can be accessed by a device, and a data volume of the data flow, and a network corresponding to a short estimated time is selected to transmit the data flow. In addition, in a data flow transmission process, a network transmission requirement of an application corresponding to a sent data packet is identified, transmission performance in a current path is evaluated based on the type of the service carried by the data flow, and whether the data flow needs to be changed is determined based on transmission performance of a link currently accessed by a terminal. In this way, transmission performance of the data flow can be better ensured, giving full play to an advantage of a multipath transmission technology.

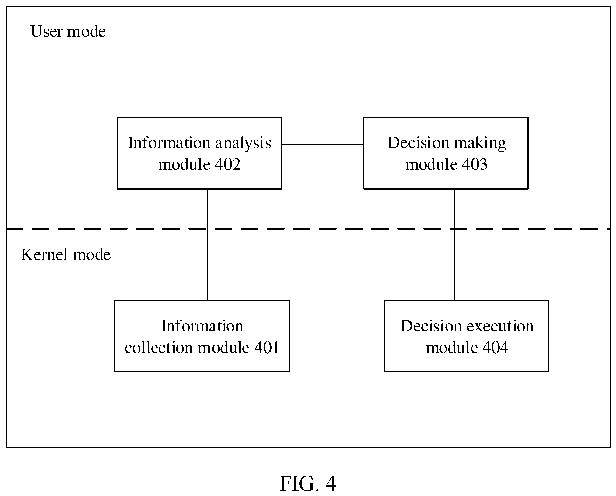

The foregoing process may be performed by modules in an operating system of a device. The modules may be implemented in a plurality of manners. For example, some modules are distributed in a user mode and some modules are distributed in a kernel mode (for example, an example in FIG. 4), or all the modules are distributed in a user mode or a kernel mode. In an implementation, these modules are not included in a protocol stack, but are modules that are arranged in parallel to the protocol stacks described in FIG. 2 and FIG. 3. With reference to FIG. 4, the following describes an apparatus for implementing the data flow control method in this application. Modules in FIG. 4 perform functions such as data packet obtaining, data processing and analysis, and decision control. An information collection module 401 and a decision execution module 404 are located in a kernel mode, and an information analysis module 402 and a decision making module 403 are located in a user mode. To sum up, a data packet mounting point (the information collection module 401) is inserted into a kernel module to obtain information about a to-be-sent data packet, where the information includes at least a field in a packet header, may include a partial payload; and the information collection module 401 may further obtain a quantity of of sent data packets and information that indicates QoS of a link, for example, an RTT of a single data packet. The information collection module 401 reports the obtained information to the information analysis module 402, and the information analysis module 402 performs processing and analysis on the information to determine, through analysis, a service carried by packets (service type identification) and performance of currently transmitting the data flow or determine, through analysis based on stored historical data, historical transmission performance of a link (link QoS identification) and a transmission resource required for the service (service QoE identification). The identification operations may be implemented by invoking different functions or implemented by looking up a corresponding rule repository by using code. Certainly, in some implementations, the information analysis module 402 may be implemented by two modules, namely, an information sorting module (configured to obtain QoS information of a data flow) and an information inference module (configured to implement at least one of the foregoing three identification operations). For a specific description, refer to the following description. These two modules are not shown in FIG. 4. Then, the decision making module 403 determines, based on the information from the information analysis module 402, how to control transmission of the data flow, and sends an instruction to the decision execution module 404. The decision execution module performs a specific operation. For example, the specific operation may be binding a data flow to a network interface, killing a data flow (that is, terminating the data flow), recreating a new data flow and allocating a network interface to the new data flow, or modifying a binding relationship between a data flow and a network interface. The data flow may be indicated by a number. For example, the number is a number of a socket port for transmitting the data flow.

In an implementation, the information collection module 401 is implemented based on Iptables, and may be mounted on a LOCAL_IN interface and a LOCAL OUT interface between a transport layer and a network layer of a protocol stack. Iptables is a data packet processing mechanism in a Linux architecture. Data packets that are received from a network and that are to be delivered to an App all pass through the LOCAL IN interface, and a data packet sent by the App to the network passes through the LOCAL_OUT interface. The information collection module 401 may be implemented by adding a segment of program at one of or each of the two locations, to monitor a data packet received or sent by the App.

When collecting information, the information collection module 401 may selectively analyze data packets received or sent by some Apps. One data flow is usually used to transmit only data of one application, while a plurality of applications may run in one device, and a data packet may carry an identifier of an application, for example, a user identifier (User ID, UID). Therefore, only a data packet of an App for which data flow control needs to be performed and some control packets (for example, ACKs) may be analyzed. These packets may also be referred to as target packets. The information collection module 401 may extract one or more of the following information of a target packet: a 5-tuple (a source IP address, a source port, a destination IP address, a destination port, and a transport layer protocol) of the data packet, a receiving time, a sending time, a data packet size (for example, a size of the entire data packet or a size of a payload in the data packet), and byte content at a specific location in the data packet (for example, a payload of the first 100 bits in the data packet). For example, the information collection module 401 may extract information about a data packet and some control packets by using a deep packet inspection (DPI) technology.

In this way, by combining information about data packets with a same 5-tuple is combined, an uplink/downlink bit rate, a packet loss rate, or other information of the data flow can be calculated based on receiving times, sending times, and data packet sizes of a plurality of data packets belonging to a same data flow. This step may be performed by the information analysis module 402. In an implementation, the information collection module 401 transfers the extracted information to the information analysis module 402. The transfer manner may be at least one of the following manners. Certainly, a plurality of transfer manners may alternatively be used in cooperation with each other. One manner is that information transfer is triggered by a condition or an event, in other words, the information is immediately delivered after the condition or the event is detected. For example, a message from a local application or a peer device is received. For example, the message is an HTTP request. Because a uniform resource locator (Uniform Resource Locator, URL) carried in a packet in the request may be used to analyze whether the packet is used to request a picture, a text, or a video, the request is immediately delivered. One manner is that information in one or more types of specific data packets is delivered when it is detected that the one or more types of data packets are received or sent. Another manner is that statistics about some information in data packets received or sent in a cycle time are collected and the information is periodically delivered. The time may be tens of milliseconds to several seconds. For example, one second is used as a cycle. A receiving/sending bit rate of a data flow in a cycle is periodically reported. This is because statistics collection of the bit rate has a low requirement for real-time performance, and power saving can be implemented by reducing a quantity of reporting times. One manner is that the information analysis module 402 proactively obtains the information from the information collection module 401.

In addition, the information collection module 401 may be further configured to: read, from a Linux protocol stack, a parameter of a socket corresponding to a data flow, and deliver the parameter to the information analysis module 402. In an implementation, the parameter includes at least one of a quantity of retransmitted data packets in one TCP flow and a send window. For example, the parameter is associated with a 5-tuple of the data flow, and is periodically reported together with information such as a bit rate.

The following provides a description by using an example in which the information analysis module 402 includes the information sorting module and the information inference module. It should be understood that, in some implementations, functions of the information sorting module and the information inference module may be integrated into one module for implementation. The information sorting module is configured to analyze the information obtained from the information collection module 401, to obtain performance of transmitting the data flow. In an implementation, the module performs analysis by using a data table. For example, if a row in the data table represents a data flow (namely, a 5-tuple), a 5-tuple in an obtained data packet may be used to perform indexing and search in the data table. Certainly, the data table may be updated or edited in an analysis process.

After receiving information reported by a package feature extraction module 401, the information sorting module finds 5-tuples corresponding to the information, and then records the data based on different 5-tuples. The information sorting module may further perform, based on information reported once or a plurality of times, aggregation and calculation on the information reported once or the plurality of times. For example, calculation is performed on information that is reported a plurality of times at a cycle of Is, to obtain information with a larger granularity (for example, five seconds or ten seconds). In this case, a parameter of performance of transmitting a data flow in a time period may be obtained, and such information can more actually reflect QoS of a network for transmitting the data flow. For example, the parameter of the transmission performance may be at least one of an average rate and a network bandwidth in a time period.

The information inference module may include three functions: identifying a data flow type, identifying a transmission status (which may be understood as service QoE) of a service corresponding to a data flow, and identifying QoS of a network for transmitting the data flow. In an implementation, the three functions are implemented by three processes. For example, each of the three processes executes one function, the three processes are independent of each other, and there is no dependency relationship between the three processes in term of a time sequence. Therefore, a time sequence between the three processes does not need to be specified during running. Results obtained after the information inference module executes the foregoing three functions are used as an output, and are transferred to the decision making module 403. The three identification operations may be implemented by using a function or implemented by looking up a repository by using code.

The decision making module 403 determines, based on the output of the information analysis module 402, how to schedule a data flow. The scheduling operation includes scheduling a newly generated data flow and scheduling a data flow that is being transmitted. For the newly generated data flow, a specific network interface card (that is, a specific network that is used) from which the newly generated data flow should be sent needs to be determined. For the data flow that is already being transmitted, whether the data flow needs to be adjusted needs to be determined. For example, as a network status changes, whether stalling occurs in a service carried by the currently transmitted data flow, whether the data flow needs to be killed, and whether a new data flow corresponding to a killed data flow needs to be created through network is determined. Therefore, the decision making module 403 may generate a plurality of types of instructions and send the plurality of types of instructions to the decision execution module 404. The plurality of types of instructions include at least one of the following: a card binding instruction for instructing to bind a data flow (that is, a 5-tuple) to a network interface card; a link disconnection instruction for instructing to kill a data flow, where the data flow is also indicated by a 5-tuple; and an IP address change instruction for changing a source IP address in a 5-tuple of a data flow.

The decision execution module 404 is configured to execute the instructions output by the decision making module 403.

For example, based on received different instructions, the decision execution module 404 may perform the following operations.
(1) For a newly created data flow connection, a target port and a target IP address are successively determined through matching according to the received instructions, to determine a preferential source network interface, and further initiate a handshake procedure (TCP) or send a data packet (UDP) on the source network interface.
(2) For an existing data flow connection, the following operations are performed according to the received instructions: For a TCP/UDP connection, an event of reestablishing a connection (that is, killing a data flow and then creating another data flow) of an application may be triggered; and for UDP connections of some specific applications, a source IP address may be directly changed. In addition, a network interface on which an event of reestablishing a connection of an application currently occurs is recorded.
(3) Then, establishment of a data flow connection is initiated, and whether a connection reestablishment event has occurred on the application before further needs to be considered based on step (1). If a connection reestablishment event has occurred, different network interfaces need to be used for connection establishment.

It should be noted that, a specific effective life cycle may be configured for each of various rules used in this application, for example, various data flow tables, a binding relationship, and an operation performed on a specific type of data flow. After the life cycle, the rule no longer takes effect.

The apparatus architecture corresponding to FIG. 4 is merely an implementation, and is used to describe how to implement the data flow control method. There may be different division manners for the foregoing modules. For example, a module may be divided into a plurality of modules, or several modules may be combined into one module. This is not limited in this application.

Because a data flow can be continuously generated, the foregoing five parts may be repeatedly executed. In the repeated execution process, estimation of network QoS becomes increasingly accurate, and determining of service QoE also becomes increasingly accurate. In this way, the control instruction delivered by the decision making module 403 is also increasingly accurate, and a plurality of data flows can be more accurately allocated to respective appropriate network interface cards. This better exerts a network transmission capability, making service execution of an App more smooth, and bringing more comfortable use experience to a user.

The following further describes a data flow control process from a time perspective. The process includes: obtaining QoS information corresponding to a data flow before the data flow is transmitted, obtaining a type of a service transmitted by using the data flow and a transmission requirement (which may also be referred to as QoE information) of the service during data flow transmission, setting a correspondence between a data flow and a network interface during a data flow creation process, and evaluating, in the data flow transmission process, whether the transmission requirement of the service corresponding to the data flow is satisfied, to trigger an operation such as killing the data flow.

For the first batch of data flows (which may be a plurality of data flows) that need to be created by an application, one of a plurality of network interfaces of a device may be randomly allocated for use. In this way, after a time period, the plurality of network interfaces may be traversed, or most of the plurality of network interfaces may be used, so that parameters indicating QoS of the application in a plurality of networks (a network interface actually indicates a network) can be obtained. Alternatively, a network interface may be allocated based on a default configuration. For example, some flows are configured to be bound to a specific type of interface by default to establish data connections. These manners may be used in cooperation with each other.

A kernel layer module and a user-mode module may collect statistics about parameters indicating network QoS, for example, a bandwidth and a delay, that are used by an application to transmit data flows by using different network interfaces or different IP addresses. This corresponds to the foregoing network QoS identification.

Identification characteristics, namely, some identification rules, of a service type may be preconfigured. In a data flow transmission process, when it is learned, through identification, that a packet received or sent by using a data flow includes a field indicating a specific type of service, that is, when the packet matches a preconfigured identification characteristic of the service type, it may be determined that the packet corresponds to the service. For example, a URL including a string such as mp4, ts, or flv corresponds to video on demand. Alternatively, the data flow in which the packet is located is determined based on a 5-tuple of the packet, so that the service corresponding to the data flow can be determined. In this way, received or sent data flows can be distinguished based on services. For example, the service type includes one or two of the following: page browsing, file downloading, audio call, video call, video on demand, game battle, live video uploading performed by an anchor, and the like. This corresponds to the foregoing identification of a service carried by a data flow.

Parameter indicators of transmission performance corresponding to different service types may be preconfigured. In this way, after statistics about a transmission status, for example, a current transmission bandwidth and a delay, of a data flow are collected based on a data packet in a data flow transmission process, comparison can be made between the transmission status and a parameter indicator of a service transmitted by using the data flow. In this case, whether the transmission status corresponding to the service type satisfies an expectation can be determined. Intuitively, whether stalling occurs can be determined. This corresponds to the foregoing service QoE identification.

Based on at least one type of information identified above, a network interface used for a data flow may be controlled (which is equivalent to that a network used is controlled). A correspondence between a data flow or a service and a network, for example, a correspondence between a data flow and an interface, may be generated in advance. For example, data flows may be classified based on one or more of a protocol type, a port, and an IP address.

In a data flow creation process, a network interface used for a data flow may be determined based on historical QoS information corresponding to a plurality of network interfaces. For example, a bandwidth and a delay that are in a network corresponding to each network interface and that are used when data transmission is previously performed by using a destination IP address of the data flow may be determined based on the IP address. If there is no record, a default bandwidth and a default delay that correspond to the network interface and that are used when data transmission is performed by using any address may be used.

In a data flow transmission process, data flow control may also be implemented. Based on QoE identification of a service transmitted by using a data flow, whether the data flow currently satisfies requirements of a transmission indicator or user experience of the service is determined. For a data flow that does not satisfy the requirements, a source network interface for sending a data packet is changed. A changing manner includes at least one of triggering an application to re-establish a link (that is, killing a current data flow and creating a new data flow through another network) and directly changing a source IP addresses. Link re-establishment is used for a data flow using the TCP, and directly changing a source address may be used for a data flow using the UDP It should be noted that, during decision making for link reestablishment, whether performance of currently transmitting the service in another type of network is better than that in a currently used network needs to be considered. A network interface corresponding to a currently transmitted service may be recorded. If a transmission indicator of a data flow carrying the service does not reach a standard, after the data flow is killed and a new data flow is created, the network interface corresponding to the service may be updated. For example, a service 1 is originally transmitted in a Wi-Fi network; and after a data flow is recreated for the service 1 by using an LTE network, the service 1 may change to be transmitted in the LTE network.

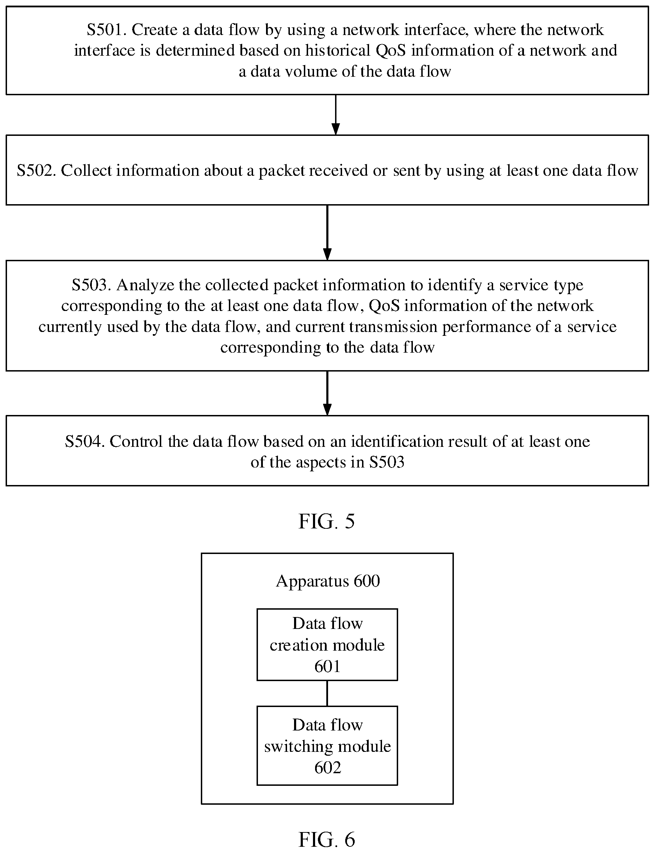

With reference to FIG. 5, the following describes some specific implementations of the data flow control method.It should be understood that the foregoing content in this application may also be used to describe and explain the implementation. Similar descriptions are not described in the following, and may be considered as multi-angle descriptions of the method and the apparatus described in this application. The implementation includes the following steps.

S501: Create a data flow by using a network interface, where the network interface corresponds to a type of network, and the network interface is determined based on historical QoS information of a network and a data volume of the data flow.

The data volume of the data flow may also be estimated. For example, the data volume is determined by using an assignment method, and different data volumes are assigned to data flows carrying different services. For another example, it is considered that data flows used for interaction with one server are of a same type, and reference may be made to each other. For another example, the data volume of the data flow is determined based on a destination IP address of the data flow, and an average data volume of data flows transmitted to the destination IP address (indicating one server) is calculated based on historical data. The average data volume is used as an assignment.

S502: Collect information about a packet received or sent by using at least one data flow.

One device may transmit a plurality of data flows at the same time.

A hook function is configured in a packet receiving/sending path (specifically, the hook function is configured in a kernel protocol stack). In this way, during packet receiving or sending, packet information is collected by using the hook function. Specifically, a DPI technology may be used. Corresponding identification logic is executed on a received or sent packet by using the hook function, to extract packet information. Certainly, another technology may alternatively be used. This is not limited in this application. For example, a data replication function is directly added to a kernel, and after data replication is performed, corresponding identification logic is executed on replicated data, to extract the packet information.

The extracted packet information includes at least one of an application identifier, a 5-tuple, and a field in a packet header of the packet. For some packets, payloads in the packets may also be extracted. For example, payloads in some uplink packets (that is, packets sent to a server, which are usually some requests) are helpful for identifying services carried by data flows in which the packets are located. In addition, statistics about a status of receiving or sending data by using a data flow may be collected to subsequently calculate a bandwidth and a round-trip delay for the data flow. For example, a quantity of bytes received or sent by using a data flow in a time period (for example, a send window) is calculated. The data may be used to calculate a bandwidth.

The kernel reports the collected information to a user mode module. A reporting manner may be at least one of the following two manners: triggering a reporting operation when each packet is received or sent, periodic reporting, and event-triggered reporting. These reporting manners may be used in cooperation with each other. For example, triggering a reporting operation when each packet is received or sent may be triggering a reporting operation when each of packets of a specific type is received or sent, for example, the first packet with a payload in each flow. For another example, in a game service, a reporting operation is triggered when each of the first five packets in a data flow is received or sent.

S503: Analyze the collected packet information to identify a service type corresponding to the at least one data flow, QoS information of the network currently used by the data flow, and current transmission performance of a service corresponding to the data flow.

The three identification operations may be respectively performed by three processes. For example, an implementation process is looking up a table, for example, a data flow table. Each row in the data flow table represents one data flow, records a 5-tuple, and records information corresponding to the data flow, for example, a bit rate, a packet loss rate, and a data flow type. Collected 5-tuples in packets are used as keys for looking up the table, to determine data flows to which the packets belong.

"Current" refers to a time period during which the packets from which information is collected are transmitted. For example, the time period may be determined based on sending timestamps of the packets or times at which the packets are identified by using a hook function.

Identification of the service type corresponding to the data flow may be performed by one process. Matching content in the "data flow table", for example, at least one of a rate of a data flow, a quantity of uplink and downlink bytes, or a value of a specific byte in a data packet payload, with a preset identification rule repository is performed to identify the service type corresponding to the data flow, where a plurality of rules are maintained in the preset identification rule repository. For example, identification rules may be as follows: If the data flow is a UDP data flow, and sizes of three of the 1^{st} to 5^{th} uplink data packets exceed 1400 bytes, it is considered that the service type is a game service; and if the data flow is a TCP data flow, a destination port is 80, and a payload in the 1^{st} uplink data packet includes a string ".mp4", it is considered that the service type is video on demand.

Identification of the QoS information of the network currently used by the data flow, that is, identification of a network transmission capability, may be performed by one process. The QoS information of the network may be a bandwidth and a delay of a link, or may include another type of parameter, or may be another parameter, for example, memory utilization, CPU utilization, a packet loss rate, and/or a packet loss model. A specific network interface card from which each data flow is sent may be known based on a source IP address of the data flow, a specific server to which the data flow is sent may be known based on a destination IP address, and a bandwidth and a delay may be calculated based on a bit rate, a packet loss rate, or another case. Therefore, a bandwidth and a delay required for sending a data flow from a network interface card X to a server Y are obtained. The QoS information includes at least one of a bandwidth, a delay, and a packet loss rate, and the delay may be a round-trip delay. For example, a bandwidth and a delay may be calculated based on a collected data volume of packets, collected duration of the packets, and information extracted from a protocol stack, for example, a send window. During identification of the QoS information of the network currently used by the data flow, some mathematical methods need to be used to perform processing such as sampling, smoothing, and averaging on the collected packet information.

Data obtained in this process may be recorded as historical data to be used as a reference for later creation of a new data flow or to update a binding policy, namely, a correspondence between a data flow and a network (corresponding to step S601). For example, a weighted average value may be calculated based on bandwidth and delay information of a plurality of different servers. To be specific, a bandwidth and a delay when a data flow is sent from the X network interface card to a new server (which has not actually performed communication before) are estimated. For another example, completion times for transmitting a to-be-created data flow in a Wi-Fi network and an LTE network are estimated based on real-time bandwidths and delays on a Wi-Fi network interface and an LTE network interface and an estimated data volume of the be-created data flow; and a network interface corresponding to a network corresponding to a shorter completion time is bound to the to-be-created data flow.

This calculation process may be repeatedly performed, in other words, the binding policy may be repeatedly updated, because network transmission performance changes in real time, and information such as a bandwidth and a delay may be continuously updated with collected information.

Identification of the current transmission performance of the service corresponding to the data flow, namely, service QoE, is also implemented by one process. In terms of user experience, the identification operation is identifying whether a service of an app is smoothly transmitted. In terms of a technical index, the identification operation is determining, based on the content in the "data flow table", whether an actual data transmission status in a network satisfies a service requirement of the app. There are different quantitative determining methods for different service types. For example, the data flow is a voice call data flow. A packet loss rate of the data flow is calculated (calculation is performed by using user-defined logic. A sequence number at a specific location in the last packet in the 1^{st} second is selected, a sequence number at a location that is in the last packet in the 2^{nd} second and that is the same as the specific location in the last packet in the 1^{st} second is selected, and a difference between the two sequence numbers is calculated, so that the difference is a quantity of data packets sent by a server to a mobile phone. If the quantity is greater than a quantity of data packets actually received by the mobile phone within the 2^{nd} second, it is considered that a packet loss occurs). Then, whether video call stalling occurs and specific stalling duration when transmission is performed at the packet loss rate are deduced by using a function, to obtain QoE evaluation. For example, for QoE evaluation, there may be a plurality of levels. In the following table, there are three levels: A, B, and C.

A final output of this step may be organized in a table form. For example, different tables may be used for service transmission quality (QoE) and network transmission performance (QoS). Table 1 and Table 2 are two examples. Table 1 indicates transmission quality of a service corresponding to the data flow.

**Table 1**

| 5-tuple | Service type. | QoE evaluation |
|---|---|---|
| srcIP1,srcPort1,dstIP1,dstPort1,TCP | Page Browsing | A (QoE is excellent, and the service is quite smooth) |
| srcIP2,srcPort2,dstIP2,dstPort2,UDP | PvP gaming | C (the service is quite unsmooth) |

Table 2 indicates transmission performance (which is described by using a bandwidth and a delay) of a network used by the data flow

**Table 2**

| Network interface card (NIC) | Destination Address | QoS evaluation |
|---|---|---|
| WIFI | IP1 | A bandwidth is 100 M, and a delay is 100 ms. |
| WIFI | IP2 | A bandwidth is 50 M, and a delay is 10 ms. |
| WIFI | Other IP Addresses | A bandwidth is 80 M, and a delay is 100 ms. |
| LTE | IP1 | A bandwidth is 10 M, and a delay is 50 ms. |
| WIFI | Other IP Addresses | A bandwidth is 10 M, and a delay is 60 ms. |

It should be noted that, the data in Table 2 may also be used to bind a newly generated data flow to a network interface. For example, for a newly created data flow, a data flow type that is in the QoS table and that corresponds to a destination IP address is searched for to obtain a transmission data volume (which may be an actually calculated value in a transmission process or an empirical value specified in a configuration file) corresponding to the destination IP address. In this case, a data flow completion time can be calculated based on the transmission data volume, a bandwidth, and a delay (for example, if the data volume is 10 M, the bandwidth is 1 M, and the delay is Is, approximately 12 seconds are required to complete transmission). Comparison is made on estimated transmission completion times of the data flow in different networks, where a shorter transmission completion time indicates better performance of transmitting the data flow in a network. In this case, a card binding instruction is generated to indicate a specific network interface card to which the data flow is to be bound. For example, one card binding instruction indicates that a data flow whose destination IP address is IP1 and whose destination port is any port is to be bound to a Wi-Fi network interface card, and another card binding instruction indicates that a data flow whose destination IP address is any IP address and whose destination port value is 80 is to be bound to an LTE network interface card.

It should be noted that, when executing a service, for example, page browsing or file downloading, the App concurrently sends a plurality of data flows in a short time (within 100 ms). In other words, the plurality of data flows need to be allocated to a suitable network. In this case, an ideal case is as follows: Each time a data flow is generated and bound to a network interface card (for example, a Wi-Fi network interface card), a remaining available bandwidth in a Wi-Fi network is updated immediately, and then an updated remaining available bandwidth in the Wi-Fi network is compared with a remaining available bandwidth in an LTE network. For example, when transmission begins, an available bandwidth in the Wi-Fi network is 10 M, and an available bandwidth in the LTE network is 8 M. During transmission of the first data flow, performance of the Wi-Fi network is better than that of the LTE network. Therefore, the Wi-Fi network is selected. A 5M bandwidth has been used for transmission of the data flow. In this case, the available bandwidth in the LTE network is 5 M, but the available bandwidth in the LTE network is still 8 M. When the second data flow is generated, performance of the LTE network is better than that of the Wi-Fi network. Therefore, the LTE network is selected for the second data flow.

However, during implementation of the method, information cannot be transferred in such a short time because the method needs to be implemented through cooperation of a plurality of modules. Therefore, a card binding instruction may be extended. For example, for a group of data flows that have specific destination IP addresses and that are generated in a short time, the Wi-Fi network is selected for the first flow, the LTE network is selected for the second flow, the Wi-Fi network is selected for the third flow, and so on. If a difference between a time at which the fourth data flow starts to be sent and a time at which the third data flow starts to be sent is greater than 500 ms, a count of the data flow is reset to 1, in other words, the Wi-Fi network is still selected for the fourth data flow.

S504. Control the data flow based on an identification result of at least one of the aspects in S503.

For example, the flow is killed and a new flow is recreated. The new flow has a same source IP address and a same destination IP address as the killed flow.

Step S504 specifically includes: determining whether the data flow needs to reselect a network, generating a corresponding instruction, and completing control of the data flow control by executing the corresponding instruction. The determining operation and instruction delivery may be completed in a user mode, and instruction execution may be completed in a kernel mode.

For example, based on the table indicating the transmission quality (QoE) of the service output in S503, it can be learned that QoE evaluation of a data flow transmitted in the Wi-Fi network is C. In this case, the table is searched for an estimated bandwidth and an estimated delay that are in the LTE network and that correspond to a destination IP address of the data flow, to determine whether better QoE can be achieved if the data flow is transmitted in the LTE network. If better QoE is achieved, a link disconnection instruction is generated. The link disconnection instruction is used to instruct to kill the data flow. For example, link disconnection is performed on a data flow whose 5-tuple is srcIP1, srcPort1, dstIP1, dstPort1, and TCP, or link disconnection is performed on a data flow whose 5-tuple is srcIP2, srcPort2, dstIP2, dstPort12, and UDP

In this way, in a multipath transmission scenario, an initial path for transmitting a data flow is determined in a link establishment phase based on network transmission performance, and the transmission path is switched in a data flow transmission process based on user experience (Quality of Experience, QoE) of a service, namely, a requirement of the service for quality of service. In this way, performance of transmitting different services can be better ensured (for example, a download rate of a downloading application are increased. For another example, it can be better ensured that a delay of a delay-sensitive service is reduced), and an advantage of transmission performance of a multi-path connection can be better exerted than a single-path connection.

The following describes effects by using test scenarios as examples. A terminal device (a phone model is Honor 20) supports a multipath protocol, and can be connected to a Wi-Fi network and an LTE network.

Test scenario 1: In strong-field conditions of the Wi-Fi network and the LTE network, download rates and upload rates of Speedtest are tested. Specifically, testing is performed to obtain performance results when only the Wi-Fi network is used, when only the LTE network is used, and when the foregoing method is used. After testing is performed for five times in each case to obtain average values, the following results are obtained: In a download scenario, a download rate is 34.8 Mbps when only the Wi-Fi network is used, a download rate is 40.5 Mbps when only the LTE network is used, and a download rate is 88.9 Mbps when the foregoing method is used. In an upload scenario, an upload rate is 15.7 Mbps when only the Wi-Fi network is used, an upload rate is 35.0 Mbps when only the LTE network is used, and an upload rate is 52.3 Mbps when the method described in this application is used. It can be learned that, in the method described in this application, an advantage of a multipath technology can be exerted, and an upload rate and a download rate can be greatly increased compared with the manner in which only the Wi-Fi network is used and the manner in which only the LTE network is used.

Test scenario 2: In same test duration, a delay-sensitive service, for example, online gaming, is transmitted when the method described in this application (both the Wi-Fi network and the LTE network are used) is applied to one user equipment, and the delay-sensitive service is transmitted when only one network is used (only the Wi-Fi network is used) in the user equipment. When the method described in this application is used, all delays are shorter than 200 ms in the test duration, and transmission duration corresponding to delays shorter than 100 ms accounts for 92.9% of the total test duration. However, when only one network is used, transmission duration corresponding to delays greater than 200 ms accounts for 23.8% of the total test duration, and transmission duration corresponding to delays less than 100 ms accounts for 73.2% of the total test duration. It can be learned that, if only one network is used, a delay fluctuates greatly, and a proportion of transmission duration corresponding to high delays in the total test duration is large. However, when the method in this application is used, a proportion of transmission duration corresponding to high delays during transmission of the delay-sensitive service can be effectively reduced, thereby effectively reducing a stalling rate of the service, and improving user experience.

The following describes apparatuses for performing the foregoing various data flow control methods in some implementations. For an apparatus implementation method and various explanatory descriptions of the method, refer to corresponding paragraphs above. Details are not described herein again. Actually, some implementations of these apparatuses have been described above in this application, for example, the part corresponding to FIG. 4. FIG. 2 and FIG. 3 also show, from other perspectives, software and hardware of the device that runs in the data flow control method. In addition, this application does not limit implementations of the various subflow establishment apparatuses configured to perform the foregoing. For example, the apparatus may include one or more modules. Names of these modules are not limited either. A connection relationship between these modules is determined by steps executed by these modules and a logic relationship between functions of these modules.

FIG. 6 is a schematic diagram of a structure of an apparatus according to this application. The apparatus 600 is located in a device supporting a multipath technology, and the device includes a plurality of network interfaces. The apparatus 600 includes a data flow creation module 601 and a data flow switching module 602. The apparatus 600 may perform any implementation of the foregoing data flow control method.

The data flow creation module 601 is configured to: based on a destination address of a first data flow and estimated transmission performance of a link from each of a plurality of network interfaces of the device to the destination address, create the first data flow and transmit data of the first data flow by using a first network interface in the plurality of network interfaces, where the transmission performance indicates a transmission time required for transmitting the data of the first data flow the the link, and a transmission time corresponding to a link from the first network interface to the destination address is shorter than that corresponding to at least one other link in the links from the plurality of network interfaces to the destination address.

The data flow switching module 602 is configured to: when a network corresponding to the first network interface cannot satisfy quality of experience QoE of a service carried by the first data flow, change a source IP address of the first data flow or terminate the first data flow.

The plurality of network interfaces correspond to different networks. For example, the plurality of network interfaces may correspond to different networks; or the plurality of network interfaces correspond to at least two types of networks, and some network interfaces may correspond to a same network.

It can be learned that, the apparatus 600 can control a transmission path of a data flow based on transmission performance of a link and quality of experience of a service, thereby ensuring transmission performance achieved when a multipath technology is used.

The transmission performance is related to a bandwidth of the link, a delay, and a data volume of the first data flow, the bandwidth is a historical bandwidth or a currently available bandwidth, and the delay is a historical delay or a current delay of the link.

In an implementation, the apparatus 600 further includes an identification module. The identification module is not shown in FIG. 6. The identification module is configured to: identify, based on a data packet received or sent through the first network interface, the service carried by the first data flow; calculate a bandwidth that is occupied by the first data flow and that is of a network corresponding to the first network interface and a delay of transmitting the first data flow through the network corresponding to the first network interface; and determine whether the network corresponding to the first network interface satisfies the quality of experience QoE of the service carried by the first data flow. In other words, the identification module is configured to implement the foregoing three identification operations.

In an implementation, the apparatus 600 further includes a recording module. The recording module is not shown in FIG. 6. The recording module is configured to record a correspondence between at least one parameter in a 5-tuple of the first data flow and the first network interface. Certainly, the recording module may further record a correspondence between another data flow and a network interface, an identification result of the identification module, a rule used in an identification process, and the like.

In an implementation, the data flow switching module 602 is further configured to: create a second data flow by using a second interface in the plurality of network interfaces, where the second data flow and the first data flow have a same source IP address and a same destination IP address and use a same transport-layer protocol; and record a correspondence between at least one parameter in a 5-tuple of the second data flow and the second network interface. Certainly, the second data flow may also be created by the data flow creation module 601.

In an implementation, the apparatus 600 may further include a bandwidth calculation module. The bandwidth calculation module may be configured to calculate a network bandwidth and a remaining available bandwidth based on a status of receiving or sending a data packet through each network interface by using each data flow. The bandwidth calculation module may also exist in the apparatus corresponding to FIG. 4. For example, the bandwidth calculation module may be included in the information analysis module.

In some implementations, one module may implement a plurality of functions, and may be understood based on the foregoing descriptions. Detailed analysis is not performed herein.

For specific implementation details of the apparatus 600, refer to the foregoing descriptions, including the paragraph corresponding to FIG. 4. For example, the data flow creation module 601 implements some functions of the four modules in FIG. 4, and the data flow switching module 602 implements some other functions of the four modules in FIG. 4. Therefore, the structure of the apparatus 600 may be considered as another division manner or implementation.

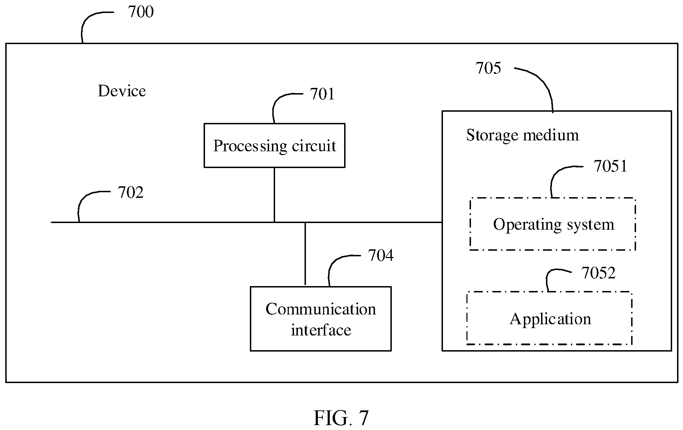

FIG. 7 shows a device 700 according to this application. The device shown in FIG. 7 may be a device supporting the multipath transmission protocol, for example, a terminal, a cloud server, a cloud proxy server, a load balancer, or a hybrid access gateway. In other words, the device in FIG. 7 may be the terminal in FIG. 1, or may be the server in FIG. 1. The device 700 includes at least one processing circuit 701 and a communication interface 704. The communication interface 704 includes a plurality of network interface cards, and the plurality of network interface cards may be physical network interface cards or virtual network interface cards. A storage medium 705 and at least one communication bus 702 are not marked in the figure. The communication bus 702 is configured to implement connection communication between these components. In other words, the device that includes a processor, a memory, and a network interface card and that is depicted in FIG. 3 is a specific implementation of the device in FIG. 7. A storage circuit may store a client or a server side of an application, a protocol stack program, and an instruction used to perform any one of the foregoing methods for creating a subflow. In other words, the software architecture and the apparatus shown in FIG. 3, FIG. 4, and FIG. 6 may be stored in the storage medium 705 in a code form. Then, the device shown in FIG. 7 may execute code in the storage medium 705 by using the processing circuit 701, and perform various data flow control methods described above in cooperation with the communication interface 704. Specific implementations, implementation details, and beneficial effects are not described herein again.

In addition, the processing circuit 701 executes the code in the storage medium 705, and cooperates with the communication interface 703 to implement the apparatuses corresponding to FIG. 4 and FIG. 6. For example, the data flow creation module 601 and the data flow switching module 602 in the apparatus 600 may be implemented by executing instructions in the storage medium 705 and driving the communication interface 704 by the processing circuit 701, and may be specifically implemented by executing the instructions and invoking a communication interface by different processes or threads running in the processing circuit 701.

In an implementation, the device 700 may be a terminal device. If the device 1000 is a terminal device, the device 1000 may optionally include a user interface, and include a display (such as a touchscreen, an LCD, a CRT, a holographic (Holographic) device, or a projector (Projector))), a keyboard, or a pointer device (such as a mouse, a trackball (trackball), a touch panel, or a touch screen). In addition, the terminal device often serves as an initiator for creating data flows of some services, that is, the foregoing device supporting the multipath technology. An operating system and an application for which a data flow needs to be created are installed in the terminal device. The storage medium 705 may include a read-only memory and a random access memory, and provide instructions and data to the processing circuit 701. A part of the storage medium 705 may further include a non-volatile random access memory (NVRAM).

When the device is a terminal, a cloud server, or a cloud proxy server, the storage medium 705 stores the following elements: an executable module or a data structure, or a subset thereof, or an extended set thereof; an operating system, including various system programs, for example, a framework layer, a core library layer, and a driver layer, and configured to implement various basic services and process a hardware-based task; and applications, including various applications, for example, a launcher (launcher), a media player (Media Player), a browser (Browser), a video application (for example, YouTube), and a social application (for example, WeChat or Skype), and configured to implement services of various applications. If the device is a gateway, the storage medium 705 may store only program code required for executing the methods described above. The storage medium 705 may further store various rules and correspondences (which is also referred to as binding relationships) mentioned above.

The processing circuit 701 may be implemented by one or more processors, and the processing circuit 701 may be a central processing unit (English: central processing unit, CPU for short). The processing circuit 701 may be a general-purpose processor, a digital signal processor (English: digital signal processing, DSP for short), an application specific integrated circuit (English: application specific integrated circuit, ASIC for short), a field-programmable gate array (English: field-programmable gate array, FPGA for short) or another programmable logic device, a discrete gate or transistor logic device, or a discrete hardware component. The general-purpose processor may be a microprocessor, or the processor may be any conventional processor, or the like.

The system bus 702 may include a data bus, a power bus, a control bus, a signal status bus, and the like. In this embodiment, for clear description, various buses are represented by the system bus 702 in FIG. 7.

The interface circuit 703 may specifically be a communication interface of a physical machine. The communications interface may be a wireless communications interface. For example, the wireless communications interface may be a wireless module, a network interface card, or the like of the physical machine. The processing circuit 701 receives/sends data from/to another device, for example, another physical machine, through the interface circuit 703.

The storage medium 705 may include a volatile memory (English: volatile memory), such as a random access memory (English: random-access memory, RAM for short); and the storage medium 704 may further include a non-volatile memory (English: non-volatile memory), such as a read-only memory (English: read-only memory, ROM for short), a flash memory (English: flash memory), a hard disk drive (English: hard disk drive, HDD for short), or a solid-state drive (English: solid-state drive, SSD). Alternatively, the storage medium 705 may include a combination of the foregoing types of memories.

The storage medium 705 may include an underlying storage medium and a memory. For example, the underlying storage medium may be a storage medium in a network interface card or the like. The memory is coupled to the underlying storage medium, and functions as a cache of the underlying storage medium.

This application further provides a computer-readable storage medium. The computer-readable storage medium includes a computer executable instruction. When a physical machine runs, a processor of the physical machine executes the computer executable instruction to enable the physical machine to perform any of the methods provided in the embodiments of the present invention.

Optionally, the readable storage medium in this embodiment may be the storage medium 703 shown in FIG. 7.

This application further describes a computer program product. The computer program product includes an instruction. When the instruction is run on a computer, the computer is enabled to perform any of the methods described in this application.

The foregoing descriptions about implementations allow a person skilled in the art to understand that, for the purpose of convenient and brief description, division into the foregoing function modules is used as an example for illustration. In actual application, the foregoing functions can be allocated to different function modules and implemented according to a requirement. That is, an inner structure of an apparatus is divided into different function modules to implement all or some of the functions described above. For detailed working processes of the foregoing system, apparatus, and unit, refer to corresponding processes in the foregoing method embodiments, and details are not described herein again.

In the embodiments provided in this application, it should be understood that the disclosed device, apparatus, and method may be implemented in other manners. For example, the described apparatus embodiment is merely an example. For example, the module division is merely logical function division and may be other division in actual implementation. For example, a plurality of units or components may be combined or integrated into another system, or some features may be ignored or not performed. For example, the sending module and the receiving module may be one module, such as a transceiver module or a transceiver. In addition, the displayed or discussed mutual couplings or direct couplings or communication connections may be implemented by using some interfaces, for example, the interface function described above. The indirect couplings or communication connections between the apparatuses or units may be implemented in electrical, mechanical, or other forms.

When software is used to implement the embodiments, the embodiments may be implemented completely or partially in a form of a computer program product. The computer program product includes one or more computer instructions. When the computer program instructions are loaded and executed on a computer, the procedures or the functions according to the embodiments of the present invention are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD), or a phase change memory).

The method and apparatus provided in this application are described above. The foregoing embodiments are merely intended to help understand the method recorded in this application. In addition, with respect to the implementation manners and the application scope, modifications may be made by a person of ordinary skill in the art based on the content recorded in this application. Therefore, the specification shall not be construed as a limitation on this application.

## Claims

1. A data flow control method, wherein the data flow control method is applied to a device supporting a multipath technology, and the method comprises:
based on a destination address of a first data flow and estimated transmission performance of a link from each of a plurality of network interfaces of the device to the destination address, creating the first data flow and transmitting data of the first data flow by using a first network interface in the plurality of network interfaces, wherein the transmission performance indicates a transmission time required for transmitting the data of the first data flow over the link, and a transmission time corresponding to a link from the first network interface to the destination address is shorter than that corresponding to at least one other link in the links from the plurality of network interfaces to the destination address; and
when a network corresponding to the first network interface cannot satisfy quality of experience QoE of a service carried by the first data flow, changing a source IP address of the first data flow or terminating the first data flow.

2. The method according to claim 1, wherein the transmission performance is related to a bandwidth of the link, a delay, and a data volume of the first data flow, the bandwidth is a historical bandwidth or a currently available bandwidth, and the delay is a historical delay or a current delay of the link.

3. The method according to claim 1 or 2, wherein the method further comprises:
identifying, based on a data packet received or sent through the first network interface, the service carried by the first data flow;
calculating a bandwidth that is occupied by the first data flow and that is of a network corresponding to the first network interface and a delay of transmitting the first data flow through the network corresponding to the first network interface; and
determining whether the network corresponding to the first network interface satisfies the quality of experience QoE of the service carried by the first data flow.

4. The method according to any one of claims 1 to 3, wherein the method further comprises: recording a correspondence between at least one parameter in a 5-tuple of the first data flow and the first network interface.

5. The method according to any one of claims 1 to 4, wherein the method further comprises:
creating a second data flow by using a second interface in the plurality of network interfaces, wherein the second data flow and the first data flow have a same source IP address and a same destination IP address and use a same transport-layer protocol; and recording a correspondence between at least one parameter in a 5-tuple of the second data flow and the second network interface.

6. The method according to any one of claims 1 to 5, wherein the plurality of network interfaces correspond to different networks.

7. A data flow control apparatus, wherein the apparatus is located in a device supporting a multipath technology, and the apparatus comprises:
a data flow creation module, configured to: based on a destination address of a first data flow and estimated transmission performance of a link from each of a plurality of network interfaces of the device to the destination address, create the first data flow and transmit data of the first data flow by using a first network interface in the plurality of network interfaces, wherein the transmission performance indicates a transmission time required for transmitting the data of the first data flow over one link, and a transmission time corresponding to a link from the first network interface to the destination address is shorter than that corresponding to at least one other link in the links from the plurality of network interfaces to the destination address; and
a data flow switching module, configured to: when a network corresponding to the first network interface cannot satisfy quality of experience QoE of a service carried by the first data flow, change a source IP address of the first data flow or terminate the first data flow.

8. The apparatus according to claim 7, wherein the transmission performance is related to a bandwidth of the link, a delay, and a data volume of the first data flow, the bandwidth is a historical bandwidth or a currently available bandwidth, and the delay is a historical delay or a current delay of the link.

9. The apparatus according to claim 7 or 8, wherein the apparatus further comprises an identification module, and the identification module is configured to:
identify, based on a data packet received or sent through the first network interface, the service carried by the first data flow;
calculate a bandwidth that is occupied by the first data flow and that is of a network corresponding to the first network interface and a delay of transmitting the first data flow through the network corresponding to the first network interface; and
determine whether the network corresponding to the first network interface satisfies the quality of experience QoE of the service carried by the first data flow.

10. The apparatus according to any one of claims 7 to 9, wherein the apparatus further comprises a recording module, configured to record a correspondence between at least one parameter in a 5-tuple of the first data flow and the first network interface.

11. The apparatus according to any one of claims 7 to 10, wherein the data flow switching module is further configured to: create a second data flow by using a second interface in the plurality of network interfaces, wherein the second data flow and the first data flow have a same source IP address and a same destination IP address and use a same transport-layer protocol; and record a correspondence between at least one parameter in a 5-tuple of the second data flow and the second network interface.

12. The apparatus according to any one of claims 7 to 11, wherein the plurality of network interfaces correspond to different networks.

13. A device, wherein the device is configured to perform data flow control; and the device comprises a processing circuit, a communication interface, and a storage medium, wherein the storage medium stores instructions, the communication interface is configured to perform information exchange with another device based on the instructions delivered by the processing circuit, and the processing circuit is configured to run the instructions in the storage medium to implement the method according to any one of claims 1 to 6.

14. A computer readable storage medium, comprising an instruction, wherein when running on a computer, the instruction causes the computer to execute the method according to any one of claims 1 to 6.

15. A computer program product, wherein the computer program product comprises instructions; and when the instructions are run on a computer, the computer is enabled to perform the method according to any one of claims 1 to 6.
